# EUROPEAN PATENT APPLICATION

(11) **EP 3 048 125 A1**
(43) Date of publication of application: **27.07.2016**
(21) Application number: 14845567.8
(22) Date of filing: 18.09.2014
(51) Int. Cl.: C08G 63/85

(54) **POLYESTER PRODUCTION METHOD**

(30) Priority: 20.09.2013 JP 2013195167
(71) Applicant: Sakai Chemical Industry Co., Ltd., Sakai-shi, Osaka 590-8502 (JP)
(72) Inventor: KAMON Akihiro, SAKAI-SHI Osaka 590-0985 (JP); IKEGAWA Keiichi, SAKAI-SHI Osaka 590-0985 (JP); NAITO Jun, SAKAI-SHI Osaka 590-0985 (JP); TABATA Keiichi, SAKAI-SHI Osaka 590-0985 (JP)
(74) Representative: Duckworth, Timothy John
(86) International application number: PCT/JP2014/074626
(87) International publication number: WO 2015/041271

(57) **Abstract**

The invention provides a method for producing polyester comprising:
a step for preparing an oligomer comprising a dicarboxylic acid diester by an esterification reaction or a transesterification reaction between a dicarboxylic acid or an ester-forming derivative thereof and a glycol, and then
a step for subjecting the oligomer to melt-polycondensation to provide polyester as melt-polycondensate,
wherein at least in the step of subjecting the oligomer to melt-polycondensation of the two steps, the oligomer is subjected to melt-polycondensation in the presence of titanium nitride and, as a polycondensation catalyst, particles of a solid base having a coating layer of titanic acid on the surfaces, thereby to provide polyester as melt-polycondensate.

## Description

### Technical Field

The present invention relates to a method for producing polyester, more particularly, to a method for producing polyester which has thermal properties that it is not increased in the value of b* when it is heated, and is accordingly superior in heat resistance, and is not deepened in a yellowish tone.

### Background Art

Polyesters typified by polyethylene terephthalate, polybutylene terephthalate and polyethylene naphthalate are superior in mechanical properties and chemical properties, and depending upon their properties, they are used in a wide variety of fields including fibers for clothes and industrial materials, films or sheets for packaging materials or magnetic tapes, bottles, which are hollow molded articles, casings of electric or electronic appliances, and other types of molded articles or components.

A representative polyester, namely, a polyester composed of an aromatic dicarboxylic acid component and an alkylene glycol component as major constituents, such as polyethylene terephthalate, is produced by first preparing bis(2-hydroxyethyl)terephthalate (BHET) and an oligomer containing the same by an esterification reaction between terephthalic acid and ethylene glycol or a transesterification reaction between dimethyl terephthalate and ethylene glycol, and then subjecting the oligomer to melt-polycondensation in a vacuum at high temperatures in the presence of a polycondensation catalyst.

For use in production of biaxially stretched bottles made from polyester known as "plastic bottles", a polyester having a higher molecular weight than polyesters used for fibers and films is needed so that the resulting bottles have a sufficient strength. Accordingly, a polyester having a higher molecular weight which is obtained by solid-polycondensation of polyester obtained as melt-polycondensate is used for production of the plastic bottles.

As a polycondensation catalyst for producing polyester, antimony trioxide has been heretofore well known. Antimony trioxide is a catalyst inexpensive and superior in catalytic activity; however, it has some problems. For example, antimony metal is deposited while it is used in polycondensation of raw materials for polyester, thereby making the resulting polyester darkened, or the resulting polyester is contaminated with the antimony metal deposited. In addition, because antimony trioxide is inherently poisonous, development of catalysts free of antimony has been awaited in recent years.

Under these circumstances, as a polycondensation catalyst for producing polyester by a transesterification reaction between dimethyl terephthalate and ethylene glycol, a glycol titanate (see Patent Literature 1) and a tetraalkoxy titanium (see Patent Literature 2) have been proposed, for example. In recent years, there has been proposed as a polycondensation catalyst a solid titanium compound which is obtained by hydrolyzing a titanium halide or a titanium alkoxide to prepare a hydroxide of titanium, and then dehydrating and drying the hydroxide by heating it at a temperature of from 30°C to 350°C (see Patent Literatures 3 and 4).

The conventional titanium-based catalysts described above have a high polymerization activity in many cases. A polyester obtained by using such a titanium-based catalyst, however, is highly liable to be colored yellow resulting from the high polymerization activity of the titanium-based catalyst, and in addition, it is thermally degraded during the stage of melt-molding as well, thereby it is further deepened in a yellowish tone.

As described above, the solid polycondensation process of polyester is a process in which a polyester obtained by melt-polycondensation is further heated to obtain a higher molecular weight polyester. A biaxially stretched polyester bottle is usually obtained by forming such a higher molecular weight polyester into a preform, heating the preform again, subsequently longitudinally stretching and then transversely stretching the perform in a blow mold,.

In particular, in the production of the biaxially stretched polyester bottle, it is required for the preform to be superior in reheating properties so that it is reheated to a temperature suitable for stretch blow molding using a lesser amount of heat energy for a lesser time.

On the other hand, as described above, although the polyester obtained by using the conventional titanium-based catalyst is yellowish, a polyester in particular for containers for beverages such as water is required to be blueish. Thus, it is also required for a polyester used for biaxially stretched bottles to be improved in a color tone so as to have a blueish tone.

In order to obtain a polyester improved in the reheating properties and color tone, a method has hitherto been proposed in which a slight amount of titanium nitride is added to a polyester obtained by solid-polycondensation using a conventional polycondensation catalyst for producing a biaxially stretched bottle, a perform is prepared therefrom, and the preform is subjected to stretch blow molding to produce a biaxially stretched bottle (see Patent Literature 6).

A further method has also been proposed in which titanium nitride is added to a reaction system at an arbitrary time of point during the stages of producing polyester using a conventional polycondensation catalyst. For example, in the case of the production of polyethylene terephthalate, titanium nitride is added to a reaction system either at a stage of producing bis(2-hydroxyethyl)terephthalate (BHET) and oligomers containing it by an esterification reaction of terephthalic acid with ethylene glycol or a transesterification of dimethyl terephthalate and ethylene glycol, or at a stage of melt-polycondensation of the oligomer (see Patent Literature 7).

The polyester obtained using the conventional polycondensation catalyst is heated at various stages for various proposes. As such being the case, when the polyester is heated at an any stage, there arises a problem that even if the polyester contains a color tone regulator, a part of the polyester is thermally decomposed and deepened in a yellowish tone.

### Prior Art Literature

### Patent Literature

Patent Literature 1: JP 46-3395 B
Patent Literature 2: JP 49-57092 A
Patent Literature 3: JP 2001-64377 A
Patent Literature 4: JP 2001-114885 A
Patent Literature 5: JP 2006-188567 A
Patent Literature 6: JP 2007-530762 A
Patent Literature 7: JP 2008-519903 A

### Summary of the Invention

### Problem to be Solved by the Invention

In order to solve the problems mentioned above, a titanic acid catalyst comprising particles of a solid base such as magnesium hydroxide or hydrotalcite having a coating layer of titanic acid on the surface and thus having a particulate structure has been recently proposed as a polycondensation catalyst for producing polyester by the present inventors (see Patent Literature 5).

In the present invention, hereinafter, such a titanic acid catalyst having a particulate structure in which the coating layer of titanic acid is formed on the surface of particles of a solid base may sometimes be referred to simply as the particulate titanic acid catalyst.

The present inventors have further continued unremitted study of production of polyester using the particulate titanic acid catalyst. As a result, they have found that in a method for producing polyester comprising the step of producing an oligomer containing a dicarboxylic acid diester by an esterification reaction or a transesterification reaction of a dicarboxylic acid or an ester-forming derivative thereof with a glycol, and the succeeding step of subjecting the oligomer to melt-polycondensation to obtain a polyester as melt-polycondensate, when the oligomer is subjected to the melt polycondensation in the presence of titanium nitride and the particulate titanic acid catalyst at least in the melt-polycondensation step of the oligomer of the two steps, a polyester which is not increased in the value of b* even when it is heated, and which is thus superior in heat resistance and is not deepened in a yellowish tone is obtained. The inventors have thus reached the present invention.

Therefore, it is an object of the invention to provide a method for producing a polyester which is superior in heat resistance and is not increased in the value of b* even when it is heated, and thus which is not deepened in a yellowish tone.

### Means to Solve the Problem

The present invention provides a method for producing polyester comprising:
a step for preparing an oligomer comprising a dicarboxylic acid diester by an esterification reaction or a transesterification reaction between a dicarboxylic acid or an ester-forming derivative thereof and a glycol, and then
a step for subjecting the oligomer to melt-polycondensation to provide polyester as melt-polycondensate,
wherein at least in the step of subjecting the oligomer to the melt-polycondensation of the two steps, the oligomer is subjected to the melt-polycondensation in the presence of titanium nitride and particles of a solid base having a coating layer of titanic acid on the surfaces, as a polycondensation catalyst, thereby to provide polyester as melt-polycondensate.

Titanium nitride is a nitride of titanium, as expressed in the name thereof, which is in the state of solid at an ambient temperature and has a melting point of about 2950°C. Titanium nitride has generally a composition of TiN, and it is known that titanium nitride is stable in a wide range of TiN_{0.42} to TiN_{1.16.}

The invention further provides a method for producing polyester comprising the above-mentioned method wherein the polyester as the melt-polycondensate is further subjected to solid-polycondensation to provide polyester as solid-polycondensate.

In the method for producing polyester according to the invention as mentioned above, it is preferred that the dicarboxylic acid is an aromatic dicarboxylic acid, the glycol is an alkylene glycol, and the oligomer comprising a dicarboxylic acid diester is an oligomer comprising an aromatic dicarboxylic acid bis(hydroxyalkyl) ester.

The solid base is preferably magnesium hydroxide or hydrotalcite.

In the method of the invention, it is preferred that titanium nitride is present in an amount of 3 ppm or more, in particular, 5 ppm or more, in terms of titanium, per weight of polyester to be obtained.

### Advantageous Effects of Invention

According to the method of the invention, a polyester which is superior in heat resistance, and which is not increased in the value of b* even when it is heated, and thus is not deepened in a yellowish tone, unlike a polyester obtained by a method in which only the particulate titanic acid catalyst is used without using the titanium nitride, is obtained by using both of the titanium nitride and the particulate titanic acid catalyst in either process of the melt-polycondensation and the solid-polycondensation.

Furthermore, according to the invention, a polyester is obtained at an increased rate of intrinsic viscosity per unit time, i.e., at an increased rate of solid-polycondensation by using particles of hydrotalcite having a coating layer of titanic acid on the surfaces and titanium nitride, as compared to the case where titanium nitride is not used together with the particles of hydrotalcite having a coating layer of titanic acid on the surfaces thereof in the production of polyester by the solid-polycondensation.

### Description of Embodiments

The method for producing polyester according to the invention comprises:
a step for preparing an oligomer comprising a dicarboxylic acid diester by an esterification reaction or a transesterification reaction between a dicarboxylic acid or an ester-forming derivative thereof and a glycol, and then
a step for subjecting the oligomer to melt-polycondensation to provide polyester as melt-polycondensate,
wherein at least in the step of subjecting the oligomer to the melt-polycondensation of the two steps, the oligomer is subjected to the melt-polycondensation in the presence of titanium nitride and particles of a solid base having a coating layer of titanic acid on the surfaces as a polycondensation catalyst, thereby to provide polyester as melt-polycondensate.

The invention further provides a method for producing polyester described above wherein the polyester obtained as the melt-polycondensate is further subjected to solid-polycondensation to obtain polyester as solid-polycondensate.

In the method for producing polyester according to the present invention, the particulate titanic acid catalyst, that is, particles of a solid base having a coating layer of titanic acid on the surfaces are used as a polycondensation catalyst for production of polyester, as described above.

Examples of the solid base include oxides, hydroxides or various composite oxides of alkaline earth metals, and oxides or composite oxides of aluminum, zinc, lanthanum, zirconium, thorium and the like. The oxides and composite oxides may be replaced partially by salts such as carbonates. Therefore, more specific examples of the solid base include oxides and hydroxides of magnesium, calcium, strontium, barium, aluminum, zinc and the like, e.g., magnesium hydroxide, calcium oxide, strontium oxide, barium oxide, zinc oxide and the like, and composite oxides such as hydrotalcite. In particular, magnesium hydroxide or hydrotalcite is preferably used as the solid base according to the invention.

The titanic acid is a hydrous titanium oxide represented by the chemical formula

TiO₂·nH₂O

wherein n is a numeral satisfying 0 < n ≦2. Such a titanic acid can be obtained, for example, by hydrolysis of a certain kind of titanium compounds as described later.

In the particulate titanic acid catalyst, when the amount of coating layer of the titanic acid is less than 0.1 parts by weight in terms of TiO₂ per 100 parts by weight of the solid base, the resulting particulate titanic acid catalyst is so low in polymerization activity that high molecular weight polyester cannot be obtained in a high productivity. On the other hand, when the amount of the coating layer of the titanic acid is more than 50 parts by weight in terms of TiO₂ per 100 parts by weight of the solid base, there arises decomposition of polyester easily because of side reactions probably derived from the catalyst used.

The particulate titanic acid catalyst can be obtained by, while maintaining an aqueous slurry of particles of the solid base at a temperature of from 5 to 100°C, preferably from 25 to 40°C, adding a water soluble titanium compound in an amount of from 0.1 to 50 parts by weight in terms of TiO₂ per 100 parts by weight of the solid base to the aqueous slurry of particles of the solid base, and as necessary, adding an alkali to the resulting mixture, to hydrolyze the water soluble titanium compound at a pH of 5 to 12, preferably at a pH of 7 to 10, thereby forming a coating layer formed of titanic acid on the surfaces of the particles of the solid base, filtering the resulting aqueous slurry of particles of the solid base having the coating layer formed of titanic acid on the surfaces, washing with water and drying the thus obtained cake, followed by disintegrating the obtained dried product. The drying temperature is preferably within the range of from 60 to 180°C, and particularly preferably within the range of from 100 to 130°C.

The particulate titanic acid catalyst can also be obtained by another method. It can be obtained by, while maintaining an aqueous slurry of particles of the solid base at a temperature of from 5 to 100°C, preferably from 25 to 40°C, adding a water soluble titanium compound in an amount of from 0.1 to 50 parts by weight in terms of TiO₂ per 100 parts by weight of the solid base and an alkali to the aqueous slurry of particles of the solid base at the same time, and if needed, an additional amount of an alkali, to hydrolyze the water soluble titanium compound at a pH of 5 to 12, preferably at a pH of 7 to 10, thereby forming a coating layer formed of titanic acid on the surfaces of the particles of the solid base, and then drying at a temperature from 60 to 180°C and pulverizing the resulting product.

Examples of the water soluble titanic compound include, for example, a titanium halide such as titanium tetrachloride, inorganic titanium salt such as titanium sulfate and titanium nitrate, an organic titanium salt such as titanium oxalate, a titanate such as titanyl-ammonium oxalate. Among these a titanium halide such as titanium tetrachloride is preferred.

The alkali used is not limited to a specific one, and an alkali metal hydroxide such as sodium hydroxide, potassium hydroxide or lithium hydroxide is preferred.

The solid base is preferably magnesium hydroxide or hydrotalcite, as mentioned hereinbefore.

The aqueous slurry of particles of magnesium hydroxide refers to, for example, an aqueous slurry obtained by neutralizing an aqueous solution of a water-soluble magnesium salt such as magnesium chloride and magnesium nitrate with an alkali such as sodium hydroxide and ammonia to precipitate magnesium hydroxide, or an aqueous slurry obtained by dispersing particles of magnesium hydroxide in water. When an aqueous slurry of magnesium hydroxide is prepared by neutralizing an aqueous solution of a water-soluble magnesium salt with an alkali, the aqueous solution of the water-soluble magnesium salt and the alkali may be subjected to simultaneous neutralization, or alternatively neutralization may be conducted by adding one to the other.

The particles of magnesium hydroxide mentioned above may be derived from any source. For example, they may be powder obtained by pulverizing natural ore or powder obtained by neutralizing an aqueous magnesium salt solution with an alkali.

The hydrotalcite is preferably represented by the following general formula (I):

M²⁺₁₋ₓM³⁺ₓ(OH-)₂Aⁿ⁻_{x/n} ·mH₂O ··· (I)

wherein M²⁺ denotes at least one divalent metal ion selected from Mg²⁺, Zn²⁺ and Cu²⁺; M³⁺ denotes at least one trivalent metal ion selected from Al³⁺, Fe³⁺ and Ti³⁺; Aⁿ⁻ denotes at least one anion selected from SO₄²⁻, Cl⁻, CO₃²⁻ and OH⁻; n denotes the valence of the anion; x is a numeral satisfying 0 < x < 0.5; and m is a numeral satisfying 0 ≦ m < 2.

In particular, a hydrotalcite in which M²⁺ is Mg²⁺, M³⁺ is Al³⁺ and Aⁿ⁻ is CO₃²⁻, i.e., one represented by the general formula (II) is preferably used:

Mg²⁺₁₋ₓAl³⁺ₓ(OH⁻)₂(CO₃²⁻)_{x/2} mH₂O ... (II)

wherein x and m are the same as those mentioned above.

Although such a hydrotalcite as mentioned above can be obtained easily as a commercial product in the market, it can also be produced, if necessary, by a conventionally known method, e.g. a hydrothermal method, using proper materials.

The aqueous slurry of hydrotalcite refers to, for example, an aqueous slurry obtained by dispersing particles of hydrotalcite mentioned above in water.

In the production of polyester according to the invention, examples of the dicarboxylic acid include an aliphatic dicarboxylic acid exemplified by succinic acid, glutaric acid, adipic acid and dodecanedicarboxylic acid, and aromatic dicarboxylic acids exemplified by terephthalic acid, isophthalic acid and naphthalene dicarboxylic acid. Examples of the ester-forming derivatives of the dicarboxylic acid include an dialkyl ester.

Examples of the glycol include ethylene glycol, propylene glycol, diethylene glycol, triethylene glycol, butylene glycol and 1,4-cyclohexanedimethanol.

Among the examples provided above, for example, aromatic dicarboxylic acids such as terephthalic acid, isophthalic acid and naphthalene dicarboxylic acid are preferably used as the dicarboxylic acid; and alkylene glycols such as ethylene glycol, propylene glycol and butylene glycol are preferably used as the glycol.

Therefore, specific examples of preferred polyesters include polyethylene terephthalate, polybutylene terephthalate, polypropylene terephthalate, polyethylene naphthalate, polybutylene naphthalate, polypropylene naphthalate and poly(1,4-cyclohexanedimethylene terephthalate).

However, the dicarboxylic acid, the ester-forming derivative thereof and the glycol used as the raw materials for production of polyester is not limited to the examples listed above. The resulting polyester is not limited to the examples shown above, either.

Such a polyester as represented by polyethylene terephthalate has been produced by the following methods. A first method comprises producing a low molecular weight oligomer containing the aforementioned BHET by a direct esterification of a dicarboxylic acid represented by terephthalic acid with a glycol represented by ethylene glycol, and subjecting the oligomer to melt-polycondensation in the presence of a polycondensation catalyst under a high vacuum at a high temperature to yield polyester with a desired molecular weight.

A second method comprises preparing, like the foregoing method, a low molecular weight oligomer containing the aforementioned BHET by a transesterification reaction between a dialkyl terephthalate represented by dimethyl terephthalate and a glycol represented by ethylene glycol, and subjecting the oligomer to melt-polycondensation in the presence of a polycondensation catalyst under a high vacuum at a high temperature to yield polyester with a desired molecular weight.

More specifically, the low molecular weight oligomer is transferred to a polymerization reactor and is heated under reduced pressure to a temperature higher than the melting point of polyethylene terephthalate usually in the range of 240°C to 280°C, that is, to a temperature of 280°C to 290°C so that the oligomer is melt-polycondensed while unreacted ethylene glycol and ethylene glycol resulting from the reaction are distilled off from the reaction system under monitoring of the viscosity of the melted reactants.

According to necessity, the polycondensation reaction may be carried out by using a plurality of reactors and changing the reaction temperature and pressure optimally in each reactor. When the viscosity of the reaction mixture reaches a predetermined value, the pressure reduction is stopped and the pressure in the polymerization reactor is returned to a normal pressure with nitrogen gas. Then, the resulting polyester is discharged from the reactor, for example, in a form of strand, cooled rapidly with water, and cut to pellets. According to the invention, polyester having an intrinsic viscosity (IV) of from 0.5 to 0.9 dL/g is obtained in this way.

A polyester to be used for production of plastic bottles requires to have a molecular weight higher than that of a polyester, for example, for fiber and film applications. As already known, such a polyester having a higher molecular weight can be obtained by solid-polycondensation of polyester obtained as melt-polycondensate.

Thus, according to the method for producing polyester of the invention, the particulate titanic acid catalysis and titanium nitride are used together as a polycondensation catalyst in the conventional production of polyester described above.

That is, the method of the invention comprises:
a step for preparing an oligomer comprising a dicarboxylic acid diester by an esterification reaction or a transesterification reaction between a dicarboxylic acid or an ester-forming derivative thereof and a glycol, and then
a step for subjecting the oligomer to melt-polycondensation to provide polyester as melt-polycondensate,
wherein at least in the step of subjecting the oligomer to the melt-polycondensation of the two steps, the oligomer is subjected to the melt-polycondensation in the presence of the particulate titanic acid catalyst and titanium nitride, thereby to provide polyester as melt-polycondensate.

In the case of production of polyethylene terephthalate, the low molecular weight oligomer containing bis(2-hydroxyethyl)terephthalate (BHET) is subjected to melt-polycondensation in the presence of the particulate titanic acid catalysis and titanium nitride to provide polyester having an intended molecular weight as melt-polycondensate.

The method of the invention may further comprise a step of subjecting the polyester obtained as the melt-polycondensate to solid-polycondensation to obtain polyester as solid-polycondensate.

According to the method of the invention, usually the oligomer is subjected to the melt-polycondensation in the presence of the particulate titanic acid catalyst and titanium nitride to obtain polyester as melt-polycondensate. Accordingly, when the polyester obtained as the melt-polycondensate is further subjected to solid-polycondensation, it is not necessary to newly use the particulate titanic acid catalyst and/or titanium nitride upon the solid-polycondensation thereof because the polyester obtained as the melt-polycondensate already contains the particulate titanic acid catalyst and titanium nitride.

In some cases, however, the particulate titanic acid catalyst and/or titanium nitride may be newly added to the polyester obtained as the melt-polycondensate upon the solid-polycondensation, and then the solid-polycondensation may be performed. For example, the polyester obtained by the melt-polycondensation may be melt-mixed with the particulate titanic acid catalyst and/or titanium nitride, and then subjected to the solid-polycondensation.

In more detail, in the solid-polycondensation of polyester, the polyester obtained by the melt-polycondensation is dried in a vacuum or in a stream of inert gas or carbon dioxide gas at a temperature of 100 to 200°C, then is crystallized at a temperature of 150 to 200°C, and then solid-polycondensation is performed by heating the polyester to a temperature lower than a melting point of the polyester, usually at a temperature of about 200 to 230°C. According to the invention, there is usually obtained polyester having an intrinsic viscosity (IV) of 0.7 to 1.2 dL/g as solid-polycondensate.

However, in the method for producing polyester according to the invention, the particulate titanic acid catalyst and titanium nitride may be added to the reaction system during the direct esterification reaction for producing the oligomer containing the bis(2-hydroxyethyl)-terephthalate (BHET) or the transesterification reaction.

The particulate titanic acid catalyst and titanium nitride are added to the reaction system in the state of a mixture thereof as it is. However, according to the invention, it is preferred that they are added to the reaction system in the state of dispersion in glycol used as one of the raw materials.

It is particularly preferred that the oligomer is subjected to melt-polycondensation in such a manner as described below. The particulate titanic acid catalyst and titanium nitride are in advance dispersed in ethylene glycol to obtain a slurry because the particulate titanic acid catalyst used can be easily dispersed in glycol, particularly in ethylene glycol. The oligomer is put into a polycondensation reaction tank and is heated and melted, and the slurry is added thereto to perform the melt-polycondensation of the oligomer.

The amounts of the particulate titanic acid catalyst and titanium nitride used in the melt-polycondensation step of the oligomer according to the invention are now explained.

According to the invention, the particulate titanic acid catalyst is used in an amount in the range of from 5 ppm by weight to 500 ppm by weight, preferably in the range of from 10 ppm by weight to 500 ppm by weight, per weight of polyester to be obtained. Hereinafter in the invention, ppm means ppm by weight. When the amount is less than 5 ppm per weight of polyester to be obtained, the catalyst activity is insufficient, and it is likely that the polyester having a desired high molecular weight cannot be obtained. On the other hand, when it is more than 500 ppm per weight of polyester to be obtained, it is likely that the resulting polyester is inferior in heat stability.

In turn, the titanium nitride is used in an amount usually of 3 ppm or more in terms of titanium, preferably 5 ppm or more, per weight of polyester to be obtained. When the amount of titanium nitride used is less than 3 ppm in terms of titanium per weight of the polyester to be obtained, it is difficult to obtain an intended polyester superior in heat-resistance.

The use of titanium nitride in an amount of 3 ppm or more in terms of titanium per weight of polyester to be obtained according to the invention provides a polyester which is superior in heat resistance and which is not increased in the value of b* even when it is heated, that is, which is not deepened in a yellowish tone.

However, even if a too large amount of titanium nitride is used, a further improvement of the heat resistance that meets the used amount cannot be observed in the polyester, and the brightness of polyester is reduced, instead. Titanium nitride is used, accordingly, in an amount usually in the range of 50 ppm or less in terms of titanium, preferably in the range of 30 ppm or less, more preferably in the range of 20 ppm or less, per weight of polyester to be obtained.

The method of the invention provides polyester, either obtained as melt-polycondensate or obtained as solid-polycondensate, superior in heat resistance.

In the invention, in order to evaluate the effect of increasing the heat resistance of polyester obtained by using titanium nitride, the amount of change in the value of b* (Δb*) before and after heating is employed as an index of improvement of heat resistance. The value of b* is one of the values in the L*a*b* color coordinate system prescribed in 1974 by International Commission on Illumination (CIE). In the L*a*b* color coordinate system, the value of L* expresses brightness, and the values of a* and b* express chromaticity, that is, a color tone and chroma.

The color approaches white with increase of the value of L*, and the color approaches black with decrease of the value of L*. White has a value of L* of 100, and black has a value of L* of 0. When the value of a* is negative, the color is green, and when the value of a* is positive, the color is red. When the value of b* is negative, the color is blue, and when the value of b* is positive, the color is yellow.

The value of b* can have either a negative value or a positive value, as described above. Thus, in the invention, in the case in which the value of b* is changed from bo to b₁, when b₁-b₀ is a positive value, it is expressed that the value of b* is increased, and when b₁-b₀ is a negative value, it is expressed that the value of b* is decreased. For example, when the value of b* is changed from 1.5 to -1.0, the amount of change in the value of b* (Δb*) is -2.5, and when the value of b* is changed from 1.5 to -1.5, the amount of change in the value of b* (Δb*) is -3.0. It is expressed, accordingly, that the latter case is decreased to a greater extent in the value of b* than the former case.

In general, when a polyester is heated, a part thereof is thermally decomposed to be deepened in a yellowish tone. Therefore, the degree of change of color tone to a yellowish tone or bluish tone can be evaluated by the amount of change in the value of b* when the polyester is heated. When a polyester is heated, if the amount of change in the value of b* (Δb*) is a positive value, the polyester is deepened in a yellowish tone, and the thermal decomposition has been advanced. On the contrary, if the amount of change in the value of b* (Δb*) is not a positive value, the polyester is not deepened in a yellowish tone, showing that the polyester does not suffer thermal degradation, and it is improved in heat resistance.

When the polyester obtained by the method of the invention is heated, the amount of change in the value of b* (Δb*) before and after the heating is not a positive value. Thus, it is shown that the polyester obtained by the method of the invention is superior in heat resistance and has a color tone which is not deepened in a yellowish tone, as described above.

In particular, the polyester obtained as melt-polycondensate by the method of the invention has a negative value of the amount of change in the value of b* (Δb*) when it has been heated, as shown in the heat resistance test described hereinafter.

Similarly, when the polyester obtained as solid-polycondensate by solid-polycondensation of the melt-polycondensate according to the method of the invention has also a negative value of the amount of change in the value of b* (Δb*) in comparison to the melt-polycondensate. This means that when a polyester is obtained as solid-polycondensate by heating a melt-polycondensate to subject it to solid-polycondensation according to the method of the invention, the amount of change in the value of b* (Δb*) of the polyesters is a negative value. Furthermore, the polyester obtained as solid-polycondensate has also a negative value of the amount of change in the value of b* (Δb*) when it has been heated.

In the case in which a polyester obtained as melt-polycondensate is subjected to solid-polycondensation according to the method of the invention, in particular, when the solid-polycondensation is performed in the presence of particles of hydrotalcite having the coating layer of titanic acid on the surface as the particulate titanic acid catalyst and titanium nitride, a polyester which is further decreased in the value of b*, superior in a color tone, and of a higher molecular weight is obtained at a higher solid-polycondensation rate, i.e., at a higher rate of increase of intrinsic viscosity per time, as compared to the case in which only the particulate titanic acid catalyst is used.

In the production of polyester according to the invention, a polycondensation catalyst containing a compound of antimony, germanium, cobalt, zinc, manganese, titanium, tin, or aluminum, which has hitherto been known, may be used together with the particulate titanic acid catalyst so far as the advantages of use of the particulate titanic acid catalyst is not affected. In order to further improve the heat stability of the obtained polyester or to prevent the coloration, the polycondensation may be performed in the presence of a stabilizer, if necessary.

The stabilizer may be added to a reaction system at any time during the polycondensation of the raw materials for polyester. The stabilizer may include, for example, phosphoric acid; phosphoric acid salts such as sodium phosphate and potassium phosphate; phosphoric acid esters such as trimethyl phosphate, triethyl phosphate, tri-n-butyl phosphate and triphenyl phosphate; acid phosphoric acid esters such as methyl acid phosphate, ethyl acid phosphate, isopropyl acid phosphate and butyl acid phosphate; phosphorous acid; phosphorous acid salts such as sodium phosphite and potassium phosphite; a phosphorous acid ester such as triphenyl phosphite; and polyphosphoric acid. The stabilizer is used in an amount in the range of 1 to 100 ppm, preferably in the range of 5 to 50 ppm, in terms of phosphorus, per weight of polyester to be obtained.

### Examples

The invention is explained with reference to examples below, but the invention is not limited at all by those examples.

### Reference Example 1

### (Preparation of aqueous slurry of hydrotalcite)

A mixed solution of 2.6 L of 3.8 mol/L aqueous solution of magnesium sulfate and 2.6 L of 0.85 mol/L aqueous solution of aluminum sulfate and a mixed solution of 2.8 L of 9.3 mol/L aqueous solution of sodium hydroxide and 2.6 L of 2.54 mol/L aqueous solution of sodium carbonate were added simultaneously to a reactor under stirring. Thereafter, a hydrothermal reaction was conducted at 180°C for 2 hours. After completion of the reaction, the resulting slurry was filtered, washed with water, dried and pulverized, thereby providing hydrotalcite having a composition Mg_{0.7}Al_{0.3}(OH)₂(CO₃)_{0.15}·0.48H₂O. The hydrotalcite was suspended in water to yield an aqueous slurry of hydrotalcite (123 g/L).

### Reference Example 2

### (Preparation of aqueous slurry of magnesium hydroxide)

5 L of water was placed in a reactor, and then were added thereto 16.7 L of 4 mol/L aqueous solution of magnesium chloride and 8.4 L of 14.3 mol/L aqueous solution of sodium hydroxide simultaneously with stirring. Thereafter, the resulting mixture was subjected to a hydrothermal reaction at a temperature of 170°C for 0.5 hours.

The thus obtained magnesium hydroxide was collected by filtration and washed with water. The resulting cake was suspended again in water to yield an aqueous slurry of magnesium hydroxide (123 g/L).

### Example 1

### (Preparation of particulate titanic acid catalyst A)

9.0 L of the aqueous slurry of hydrotalcite (123 g/L) obtained in Reference Example 1 was placed in a 25-L capacity reactor. Then, 3.2 L of an aqueous solution of titanium tetrachloride (69.2 g/L in terms of TiO₂, manufactured by Osaka Titanium Technologies Co., Ltd.) and 3.2 L of an aqueous solution of sodium hydroxide (99.6 g/L in terms of NaOH, manufactured by Tokuyama Corporation) were added dropwise simultaneously to the aqueous slurry of hydrotalcite over eight hours so that the resulting aqueous slurry had a pH of 9.0. After completion of the addition, the resultant was aged for one hour, thereby forming a coating layer of titanic acid on the surfaces of the particles of the hydrotalcite.

The thus obtained aqueous slurry of the particles of hydrotalcite having on the surfaces the coating layer of titanic acid was filtered, and the cake obtained was washed with water, and dried. The dried product was disintegrated to provide a polycondensation catalyst A that had 20 parts by weight of coating layer formed of titanic acid in terms of TiO₂ per weight of 100 parts by weight of the hydrotalcite.

### (Production of polyester a-1)

500 g of bishydroxyethyl terephthalate (manufactured by Pet Refine Technogy Co., Ltd., the same hereinafter) was placed in a 1-L capacity polycondensation reactor. The bishydroxyethyl terephthalate was heated and melted while it was stirred and a nitrogen gas was circulated in the reactor, and then it was further heated to a temperature of 240°C.

0.019 g (50 ppm per weight of polyester to be obtained, 5 ppm in terms of titanium) of the particulate titanic acid catalyst A, and 0.0025 g (6.5 ppm per weight of polyester to be obtained, 5 ppm in terms of titanium) of titanium nitride having an average particle size of 0.15 µm (manufactured by Wako Pure Chemical Industries, Ltd., hereinafter the same) were dispersed in ethylene glycol to prepare a slurry, and the slurry was put into the reactor.

After 10 minutes, ethylene glycol in which 0.028 g (0.024 g in terms of phosphoric acid, and 20 ppm in terms of phosphorus per weight of polyester to be obtained) of aqueous solution of phosphoric acid having a concentration of 85% by weight (manufactured by Wako Pure Chemical Industries, Ltd., hereinafter the same) had been dissolved was added to the reactor as a stabilizer.

Then, the temperature of the reactor was raised from 240°C to 280°C over one hour and, at the same time, the pressure was reduced from a normal pressure to 130 Pa over one hour. Then, the melt-polycondensation reaction was performed until a load applied to the motor of the stirrer reached a pre-determined value while the temperature and the pressure were kept at the above values.

After the completion of the polycondensation reaction, the pressure in the reactor was returned to a normal pressure with nitrogen gas, and the melted polyester obtained was discharged in a form of a strand through an outlet opening at the bottom of the reactor. The obtained polyester was cooled and cut to obtain pellets of polyester a-1.

The melt-polycondensation time in the above-mentioned production of polyester by the melt-polycondensation of bishydroxyethyl terephthalate, and the intrinsic viscosity and color tone of the polyester obtained are shown in Table 1.

### (Heat resistance test of polyester a-1)

The heat resistance test was performed in a manner in which 50 g of pellets of the polyester a-1 was put on a magnetic dish, heated to a temperature of 205°C over 3 hours in an electric furnace in the air, and then heated at the temperature for 16 hours. The color tones of the pellets of the polyester before and after the heat resistance test, and the amount of change in the value of b* (Δb*) before and after the heat resistance test are shown in Table 2.

### (Production of polyester a-2)

20 g of pellets of the raw material polyester a-1 was put into a fixed bed circulation reactor, dried at 160°C over 4 hours in a nitrogen stream, and then crystallized at 190°C over one hour. The thus treated pellets of the polyester were subjected to solid-polycondensation by heating them at 208°C over 18 hours in a nitrogen stream to obtain pellets of polyester a-2.

The intrinsic viscosity of each of the raw material polyester a-1 and the polyester a-2 obtained by the solid-polycondensation of the polyester a-1, the difference in the intrinsic viscosities (ΔIV) of the polyesters, the color tone of each of the raw material polyester a-1 and the polyester a-2 obtained by the solid-polycondensation of the polyester a-1, and the amount of change in the values of b* (Δb*) of the polyesters are shown in Table 3. The difference in the intrinsic viscosities (ΔIV) is a value obtained by subtracting the intrinsic viscosity of the raw material polyester a-1 from the intrinsic viscosity of the polyester a-2 obtained by the solid-polycondensation of the polyester a-1.

### (Heat resistance test of polyester a-2)

The polyester a-2 was subjected to the heat resistance test in the same manner as in the heat resistance test of the polyester a-1. The color tones of the polyester before and after the heat resistance test, and the amount of change in the values of b* (Δb*) before and after the heat resistance test are shown in Table 4.

### Example 2

### (Production of polyester b-1 and heat resistance test thereof)

Pellets of polyester b-1 were obtained in the same manner as in Example 1 except that 0.0049 g (13 ppm per weight of polyester to be obtained, 10 ppm in terms of titanium) of titanium nitride was used in the melt-polycondensation of bishydroxyethyl terephthalate. The meltpolymerization time in the production of the polyester, and the intrinsic viscosity and the color tone of the polyester obtained are shown in Table 1.

The polyester b-1 was subjected to the heat resistance test in the same manner as in that of the polyester a-1. The color tones of the polyester before and after the heat resistance test, and the amount of change in the values of b* (Δb*) before and after the heat resistance test are shown in Table 2.

### (Production of polyester b-2 and heat resistance test thereof)

Pellets of the polyester b-1 were subjected to the solid-polycondensation in the same manner as in Example 1 to obtain pellets of polyester b-2.

The intrinsic viscosity of each of the raw material polyester b-1 and the polyester b-2 obtained by the solid-polycondensation of the polyester b-1, the solid polycondensation rate, the color tone of each of the raw material polyester b-1 and the polyester b-2 obtained by the solid-polycondensation of the polyester b-1, and the amount of change in the values of b* (Δb*) of the polyesters are shown in Table 3.

The polyester b-2 was subjected to the heat resistance test in the same manner as in Example 1. The color tones of the polyester before and after the heat resistance test, and the amount of change in the values of b* (Δb*) before and after the heat resistance test are shown in Table 4.

### Example 3

### (Production of polyester c-1 and heat resistance test thereof)

Pellets of polyester c-1 were obtained in the same manner as in Example 1 except that 0.0098 g (26 ppm per weight of polyester to be obtained, 20 ppm in terms of titanium) of titanium nitride was used in the melt-polycondensation of bishydroxyethyl terephthalate. The melt polymerization time in the production of the polyester, and the intrinsic viscosity and the color tone of the obtained polyester are shown in Table 1.

The polyester c-1 was subjected to the heat resistance test in the same manner as in Example 1. The color tones of the polyester before and after the heat resistance test, and the amount of change in the values of b* (Δb*) before and after the heat resistance test are shown in Table 2.

### (Production of polyester c-2 and heat resistance test thereof)

Pellets of the polyester c-1 were subjected to the solid polycondensation in the same manner as in Example 1 to obtain pellets polyester c-2.

The intrinsic viscosity of each of the raw material polyester c-1 and the polyester c-2 obtained by the solid-polycondensation of the polyester c-1, the difference in the intrinsic viscosities of the polyesters, the color tone of each of the raw material polyester c-1 and the polyester c-2 obtained by the solid-polycondensation of the polyester c-1, and the amount of change in the values of b* (Δb*) of the polyesters are shown in Table 3.

The polyester c-2 was subjected to the heat resistance test in the same manner as in Example 1. The color tones of the polyester before and after the heat resistance test, and the amount of change in the values of b* (Δb*) before and after the heat resistance test are shown in Table 4.

### Example 4

### (Preparation of particulate titanic acid catalyst B)

9.0 L of the aqueous slurry of magnesium hydroxide (123 g/L) obtained in Reference Example 2 was placed in a 25-L capacity reactor. 3.2 L of an aqueous solution of titanium tetrachloride (69.2 g/L in terms of TiO₂) and 3.2 L of an aqueous solution of sodium hydroxide (99.6 g/L in terms of NaOH) were added dropwise simultaneously to the aqueous slurry of magnesium hydroxide over eight hours so that the resulting aqueous slurry had a pH of 10.0. After completion of the addition, the resultant was aged for one hour to form a coating layer of titanic acid on the surfaces of the particles of the magnesium hydroxide.

The thus obtained aqueous slurry of the particles of magnesium hydroxide having on the surfaces the coating layer of titanic acid was filtered, and the cake obtained was washed with water, and dried. The dried cake was disintegrated to provide a polycondensation catalyst B that had 20 parts by weight of coating layer of titanic acid in terms of TiO₂ per weight of 100 parts by weight of the magnesium hydroxide.

### (Production of polyester d-1 and heat resistance test thereof)

Pellets of the polyester d-1 were obtained in the same manner as in Example 1 except that 0.019 g of the particulate titanic acid catalyst B (50 ppm per weight of the polyester to be obtained, 5 ppm in terms of titanium) and 0.0025 g of titanium nitride (6.5 ppm per weight of polyester to be obtained, 5 ppm in terms of titanium) were used in the melt- polycondensation of bishydroxyethyl terephthalate.

The melt-polycondensation time in the production of the polyester and the intrinsic viscosity and color tone of the polyester obtained are shown in Table 1.

The polyester d-1 was subjected to the heat resistance test in the same manner as in Example 1. The color tones of the polyester before and after the heat resistance test, and the amount of change in the values of b* (Δb*) before and after the heat resistance test are shown in Table 2.

### (Production of polyester d-2 and heat resistance test thereof)

Pellets of the polyester d-1 was subjected to solid-polycondensation in the same manner as in Example 1 to provide pellets of polyester d-2.

The intrinsic viscosity of each of the raw material polyester d-1 and the polyester d-2 obtained by the solid-polycondensation of the polyester d-1, the difference in the intrinsic viscosities, the color tone of each of the raw material polyester d-1 and the polyester d-2 obtained by the solid-polycondensation of the polyester d-1, and the amount of change of the values of b* (Δb*) are shown in Table 3.

The polyester d-2 was subjected to heat resistance test in the same manner as in Example 1. The color tones of the polyester before and after the heat resistance test and the amount of change of the values of b* (Δb*) are shown in Table 4.

### Example 5

### (Production of polyester e-1 and heat resistance test thereof)

Pellets of polyester e-1 were obtained in the same manner as in Example 4 except that 0.0049 g of titanium nitride (13 ppm per weight of polyester to be obtained, 10 ppm in terms of titanium) was used in the melt-polycondensation of bishydroxyethyl terephthalate. The melt-polycondensation time in the production of the polyester and the intrinsic viscosity and color tone of the polyester obtained are shown in Table 1.

The polyester e-1 was subjected to the heat resistance test in the same manner as in Example 1. The color tones of the polyester before and after the heat resistance test and the amount of change in the values of b* (Δb*) of the polyester are shown in Table 2.

### (Production of polyester e-2 and heat resistance test thereof)

Pellets of the polyester e-1 was subjected to solid-polycondensation in the same manner as in Example 1 to provide pellets of polyester e-2.

The intrinsic viscosity of each of the raw material polyester e-1 and the polyester e-2 obtained by the solid-polycondensation of the polyester e-1, the difference in the intrinsic viscosities, the color tone of each of the raw material polyester e-1 and the polyester e-2 obtained by the solid-polycondensation of the polyester e-1, and amount of change in the values of b* (Δb*) are shown in Table 3.

The polyester e-2 was subjected to the heat resistance test in the same manner as in Example 1. The color tones of the polyester before and after the heat resistance test and the amount of change in the values of b* (Δb*) are shown in Table 4.

### Example 6

### (Production of polyester f-1 and heat resistance test thereof)

Pellets of polyester f-1 were obtained in the same manner as in Example 4 except that 0.0098 g of titanium nitride (26 ppm per weight of polyester to be obtained, 20 ppm in terms of titanium) was used in the melt-polycondensation of bishydroxyethyl terephthalate. The melt-polycondensation time in the production of the polyester and the intrinsic viscosity and color tone of the polyester obtained are shown in Table 1.

The polyester f-1 was subjected to the heat resistance test in the same manner as in Example 1. The color tones of the polyester before and after the heat resistance test and the amount of change in the values of b* (Δb*) are shown in Table 2.

### (Production of polyester f-2 and heat resistance test thereof)

Pellets of the polyester f-1 was subjected to solid-polycondensation in the same manner as in Example 1 to provide pellets of polyester f-2.

The intrinsic viscosity of each of the raw material polyester f-1 and the polyester f-2 obtained by the solid-polycondensation of the polyester f-1, the difference in the intrinsic viscosities, the color tone of each of the raw material polyester f-1 and the polyester f-2 obtained by the solid-polycondensation of the polyester f-1, and the amount of change in the values of b* (Δb*) are shown in Table 3.

The polyester f-2 was subjected to the heat resistance test in the same manner as in Example 1. The color tones of the polyester before and after the heat resistance test and the amount of change in the values of b* (Δb*) are shown in Table 4.

### Example 7

### (Production of polyester k-1 and heat resistance test thereof)

Pellets of polyester k-1 were obtained in the same manner as in Example 1 except that 0.0015 g of titanium nitride (3.9 ppm per weight of polyester to be obtained, 3 ppm in terms of titanium) was used in the melt-polycondensation of bishydroxyethyl terephthalate. The melt-polycondensation time in the production of the polyester and the intrinsic viscosity and color tone of the polyester obtained are shown in Table 1.

The polyester k-1 was subjected to the heat resistance test in the same manner as in Example 1. The color tones of the polyester before and after the heat resistance test and the amount of change in the values of b* (Δb*) are shown in Table 2.

### (Production of polyester k-2 and heat resistance test thereof)

The pellets of the polyester k-1 were subjected to solid-polycondensation in the same manner as in Example 1 to provide pellets of polyester k-2.

The intrinsic viscosity of each of the raw material polyester k-1 and the polyester k-2 obtained by the solid-polycondensation of the polyester k-1, the polycondensation rate, the color tone of each of the raw material polyester k-1 and the polyester k-2 obtained by the solid-polycondensation of the polyester k-1, and the amount of change in the values of b* (Δb*) are shown in Table 3.

The polyester k-2 was subjected to the heat resistance test in the same manner as in Example 1. The color tones of the polyester before and after the heat resistance test and the amount of change in the values of b* (Δb*) are shown in Table 4.

### Example 8

### (Production of polyester 1-1 and heat resistance test thereof)

Pellets of polyester 1-1 were obtained in the same manner as in Example 4 except that 0.0015 g of titanium nitride (3.9 ppm per weight of polyester to be obtained, 3 ppm in terms of titanium) was used in the melt-polycondensation of bishydroxyethyl terephthalate. The melt-polycondensation time in the production of the polyester and the intrinsic viscosity and color tone of the polyester obtained are shown in Table 1.

The polyester 1-1 was subjected to the heat resistance test in the same manner as in Example 1. The color tones of the polyester before and after the heat resistance test and the amount of change in the values of b* (Δb*) are shown in Table 2.

### (Production of polyester 1-2 and heat resistance test thereof)

The pellets of the polyester 1-1 were subjected to solid-polycondensation in the same manner as in Example 1 to provide pellets of polyester 1-2.

The intrinsic viscosity of each of the raw material polyester 1-1 and the polyester 1-2 obtained by the solid-polycondensation of the polyester l-1, the difference in the intrinsic viscosities, the color tone of each of the raw material polyester l-1 and the polyester 1-2 obtained by the solid-polycondensation of the polyester 1-1, and the amount of change in the values of b* (Δb*) are shown in Table 3.

The polyester 1-2 was subjected to the heat resistance test in the same manner as in Example 1. The color tones of the polyester before and after the heat resistance test and the amount of change in the values of b* (Δb*) are shown in Table 4.

### Example 9

### (Production of polyester m-1 and heat resistance test thereof)

Pellets of polyester m-1 were obtained in the same manner as in Example 1 except that 0.008 g of particulate titanic acid catalyst A (20 ppm per weight of polyester to be obtained, 2 ppm in terms of titanium) and 0.0025 g of titanium nitride (6.5 ppm per weight of polyester to be obtained, 5 ppm in terms of titanium) were used in the melt-polycondensation of bishydroxyethyl terephthalate. The melt-polycondensation time in the production of the polyester, and intrinsic viscosity and color tone of the polyester obtained are shown in Table 1.

The polyester m-1 was subjected to the heat resistance test in the same manner as in Example 1. The color tones of the polyester before and after the heat resistance test and the amount of change in the values of b* (Δb*) are shown in Table 2.

### (Production of polyester m-2 and heat resistance test thereof)

The pellets of the polyester m-1 were subjected to solid-polycondensation in the same manner as in Example 1 to provide pellets of polyester m-2.

The intrinsic viscosity of each of the raw material polyester m-1 and the polyester m-2 obtained by the solid-polycondensation of the polyester m-1, the solid-polycondensation rate, the color tones of the raw material polyester m-1 and the polyester m-2 obtained by the solid-polycondensation of the polyester m-1, and the amount of change in the values of b* (Δb*) are shown in Table 3.

The polyester m-2 was subjected to the heat resistance test in the same manner as in Example 1. The color tones of the polyester before and after the heat resistance test and the amount of change in the values of b* (Δb*) are shown in Table 4.

### Example 10

### (Production of polyester n-1 and heat resistance test thereof)

Pellets of polyester n-1 were obtained in the same manner as in Example 1 except that 0.189 g of particulate titanic acid catalyst A (500 ppm per weight of polyester to be obtained, 50 ppm in terms of titanium) and 0.0098 g of titanium nitride (26 ppm per weight of polyester to be obtained, 20 ppm in terms of titanium) were used in the melt-polycondensation of bishydroxyethyl terephthalate. The melt-polycondensation time in the production of the polyester and the intrinsic viscosity and color tone of the polyester obtained are shown in Table 1.

The polyester n-1 was subjected to the heat resistance test in the same manner as in Example 1. The color tones of the polyester before and after the heat resistance test and the amount of change in the values of b* (Δb*) are shown in Table 2.

### (Production of polyester n-2 and heat resistance test thereof)

The pellets of the polyester n-1 were subjected to solid-polycondensation in the same manner as in Example 1 to provide pellets of polyester n-2.

The intrinsic viscosity of each of the raw material polyester n-1 and the polyester n-2 obtained by the solid-polycondensation of the polyester n-1, the difference in the intrinsic viscosities, the color tones of the raw material polyester n-1 and the polyester n-2 obtained by the solid-polycondensation of the polyester n-1, and the amount of change in the values of b* (Δb*) are shown in Table 3.

The polyester n-2 was subjected to the heat resistance test in the same manner as in Example 1. The color tones of the polyester before and after the heat resistance test and the amount of change in the values of b* (Δb*) are shown in Table 4.

### Comparative Example 1

### (Production of polyester g-1 and heat resistance test thereof)

Pellets of polyester g-1 were obtained in the same manner as in Example 1 except that 0.019 g of particulate titanic acid catalyst A (50 ppm per weight of polyester to be obtained, 5 ppm in terms of titanium) was used, but titanium nitride was not used, in the melt-polycondensation of bishydroxyethyl terephthalate. The melt-polycondensation time in the production of the polyester and the intrinsic viscosity and color tone of the polyester obtained are shown in Table 1.

The polyester g-1 was subjected to the heat resistance test in the same manner as in Example 1. The color tones of the polyester before and after the heat resistance test and the amount of change in the values of b* (Δb*) are shown in Table 2.

### (Production of polyester g-2 and heat resistance test thereof)

Pellets of the polyester g-1 were subjected to solid-polycondensation in the same manner as in Example 1 to provide pellets of polyester g-2.

The intrinsic viscosity of each of the raw material polyester g-1 and the polyester g-2 obtained by the solid-polycondensation of the polyester g-1, the difference in the intrinsic viscosities, the color tone of each of the raw material polyester g-1 and the polyester g-2 obtained by the solid-polycondensation of the polyester g-1, and the amount of change in the values of b* (Δb*) are shown in Table 3.

The polyester g-2 was subjected to the heat resistance test in the same manner as in Example 1. The color tones of the polyester before and after the heat resistance test and the amount of change in the values of b* (Δb*) are shown in Table 4.

### Comparative Example 2

### (Production of polyester h-1 and heat resistance test thereof)

Pellets of polyester h-1 were obtained in the same manner as in Example 4 except that 0.019 g of particulate titanic acid catalyst B (50 ppm per weight of polyester to be obtained, 5 ppm in terms of titanium), but titanium nitride was not used, in the melt-polycondensation of bishydroxyethyl terephthalate. The melt- polycondensation time in the production of the polyester and the color tone and intrinsic viscosity of the polyester obtained are shown in Table 1.

The polyester h-1 was subjected to the heat resistance test in the same manner as in Example 1. The color tones of the polyester before and after the heat resistance test and the amount of change in the values of b* (Δb*) are shown in Table 2.

### (Production of polyester h-2 and heat resistance test thereof)

The pellets of the polyester h-1 were subjected to solid-polycondensation in the same manner as in Example 1 to provide pellets of polyester h-2.

The intrinsic viscosity of each of the raw material polyester h-1 and the polyester h-2 obtained by the solid-polycondensation of the polyester h-1, the difference in the intrinsic viscosities of the polyesters, the color tone of each of the raw material polyester h-1 and the polyester h-2 obtained by the solid-polycondensation of the polyester h-1, and the amount of change in the values of b* (Δb*) are shown in Table 3.

The polyester h-2 was subjected to the heat resistance test in the same manner as in Example 1. The color tones of the polyester before and after the heat resistance test and the amount of change in the values of b* (Δb*) are shown in Table 4.

### Comparative Example 3

### (Production of polyester i-1 and heat resistance test thereof)

Pellets of polyester i-1 were obtained in the same manner as in Example 1 except that 0.049 g of titanium nitride (130 ppm per weight of polyester to be obtained, 100 ppm in terms of titanium) was used in the melt-polycondensation of bishydroxyethyl terephthalate. The melt-polycondensation time in the production of the polyester and the intrinsic viscosity and color tone of the polyester obtained are shown in Table 1.

The polyester i-1 was subjected to the heat resistance test in the same manner as in Example 1. The color tones of the polyester before and after the heat resistance test and the amount of change in the values of b* (Δb*) are shown in Table 2.

### (Production of polyester i-2 and heat resistance test thereof)

The pellets of the polyester g-1 were subjected to solid-polycondensation in the same manner as in Example 1 to provide pellets of polyester i-2.

The intrinsic viscosity of each of the raw material polyester i-1 and the polyester i-2 obtained by the solid-polycondensation of the polyester i-1, the difference in the intrinsic viscosities of the polyesters, the color tone of each of the raw material polyester i-1 and the polyester i-2 obtained by the solid-polycondensation of the polyester i-1, and the amount of change in the values of b* (Δb*) of the polyesters are shown in Table 3.

The polyester i-2 was subjected to the heat resistance test in the same manner as in Example 1. The color tones of the polyester before and after the heat resistance test and the amount of change in the values of b* (Δb*) are shown in Table 4.

### Comparative Example 4

### (Production of polyester j-1 and heat resistance test thereof)

Pellets of polyester j-1 were obtained in the same manner as in Example 1 except that 0.019 g of particulate titanic acid catalyst A (50 ppm per weight of polyester to be obtained, 5 ppm in terms of titanium) and 0.0006 g of Solvent Blue (1.5 ppm per weight of polyester to be obtained), a blue color regulator, in place of titanium nitride, were used in the melt-polycondensation of bishydroxyethyl terephthalate. The melt-polycondensation time in the production of the polyester and the intrinsic viscosity and color tone of the polyester obtained are shown in Table 1.

The polyester j-1 was subjected to the heat resistance test in the same manner as in Example 1. The color tones of the polyester before and after the heat resistance test and the amount of change in the values of b* (Δb*) are shown in Table 2.

### (Production of polyester j-2 and heat resistance test thereof)

The pellets of the polyester j-1 were subjected to solid-polycondensation in the same manner as in Example 1 to provide pellets of polyester j-2.

The intrinsic viscosity of each of the raw material polyester j-1 and the polyester j-2 obtained by the solid-polycondensation of the polyester j-1, the difference in the intrinsic viscosities of the polyesters, the color tone of each of the raw material polyester j-1 and the polyester j-2 obtained by the solid-polycondensation of the polyester j-1, and the amount of change in the values of b* (Δb*) of the polyesters are shown in Table 3.

The polyester j-2 was subjected to the heat resistance test in the same manner as in Example 1. The color tones of the polyester before and after the heat resistance test and the amount of change in the values of b* (Δb*) are shown in Table 4.

### Comparative Example 5

### (Production of polyester o-1 and heat resistance test thereof)

Pellets of polyester o-1 were obtained in the same manner as in Example 1 except that 0.189 g of particulate titanic acid catalyst A (500 ppm per weight of polyester to be obtained, 50 ppm in terms of titanium), but titanium nitride was not used, in the melt- polycondensation of bishydroxyethyl terephthalate. The melt- polycondensation time in the production of the polyester and the intrinsic viscosity and color tone of the polyester obtained are shown in Table 1.

The polyester o-1 was subjected to the heat resistance test in the same manner as in Example 1. The color tones of the polyester before and after the heat resistance test and the amount of change in the values of b* (Δb*) are shown in Table 2.

### (Production of polyester o-2 and heat resistance test thereof)

The pellets of the polyester o-1 were subjected to solid-polycondensation in the same manner as in Example 1 to provide pellets of polyester o-2.

The intrinsic viscosity of each of the raw material polyester o-1 and the polyester o-2 obtained by the solid-polycondensation of the polyester o-1, the difference in the intrinsic viscosities of the polyesters, the color tone of each of the raw material polyester o-1 and the polyester o-2 obtained by the solid-polycondensation of the polyester o-1, and the amount of change in the values of b* (Δb*) are shown in Table 3.

The polyester o-2 was subjected to the heat resistance test in the same manner as in Example 1. The color tones of the polyester before and after the heat resistance test, and the amount of change in the value of b* (Δb*) of the polyester before and after the heat resistance test are shown in Table 4.

In Table 1, the numerical values in the columns of catalyst content and TiN content represent the amounts (ppm) of the catalyst and TiN, respectively, per weight of polyester to be obtained. The numerical values in the parentheses in the columns of catalyst content and TiN content represent the amounts (ppm) of the catalyst and TiN in terms of titanium, respectively, per weight of polyester to be obtained. The numerical values in the column of content of color regulator represents the amounts (ppm) per weight of polyester to be obtained.

**[Table 1]**

| Table 1 | | | | | | | | | | |
|---|---|---|---|---|---|---|---|---|---|---|
| | Polyester | Catalyst | Catalyst content | TiN content | Color tone regulator content | Melt-polycondensation time | Intrinsic viscosity | Color tone of polyester (before heat resistance test) | | |
| | | | (ppm) | (ppm) | (ppm) | (min.) | (dL/g) | L* | a* | b* |
| Example 1 | a-1 | A | 50 (5) | 6.5 (5) | - | 183 | 0.648 | 53.0 | -1.28 | 6.90 |
| Example 2 | b-1 | A | 50 (5) | 13(10) | - | 183 | 0.662 | 51.8 | -1.56 | 6.75 |
| Example 3 | c-1 | A | 50 (5) | 26 (20) | - | 185 | 0.630 | 44.3 | -1.29 | 4.82 |
| Example 4 | d-1 | B | 50 (5) | 6.5 (5) | - | 203 | 0.628 | 55.9 | -1.51 | 8.02 |
| Example 5 | e-1 | B | 50 (5) | 13 (10) | - | 210 | 0.626 | 51.5 | -1.57 | 6.91 |
| Example | f-1 | B | 50 (5) | 26 (20) | - | 192 | 0.617 | 47.1 | -1.35 | 5.05 |
| Example 7 | k-1 | A | 50 (5) | 3.9 (3) | - | 182 | 0.630 | 56.2 | -1.18 | 7.74 |
| Example 8 | l-1 | B | 50 (5) | 3.9 (3) | - | 208 | 0.631 | 56.0 | -1.13 | 8.62 |
| Example 9 | m-1 | A | 20 (2) | 6.5 (5) | - | 245 | 0.634 | 56.0 | -1.41 | 7.48 |
| Example 10 | n-1 | A | 500 (50) | 26 (20) | - | 93 | 0.651 | 45.9 | -0.59 | 11.24 |
| Comparative 1 | g-1 | A | 50 (5) | - | - | 169 | 0.639 | 58.8 | -1.11 | 8.36 |
| Comparative 2 | h-1 | B | 50 (5) | - | - | 222 | 0.625 | 55.9 | -1.18 | 9.15 |
| Comparative 3 | i-1 | TiN | - | 130 (100) | - | 309 | 0.631 | 26.7 | 0.40 | 0.94 |
| Comparative 4 | j-1 | A | 50 (5) | - | 1.5¹⁾ | 179 | 0.650 | 56.5 | -3.42 | 5.88 |
| Comparative 5 | o-1 | A | 500 (50) | - | - | 92 | 0.631 | 55.2 | 0.51 | 16.26 |

| | | | | | | | | | | |
|---|---|---|---|---|---|---|---|---|---|---|
| (Notes) 1) Solvent Blue 104 | | | | | | | | | | |

**[Table 2]**

| Table 2 | | | | | | | | |
|---|---|---|---|---|---|---|---|---|
| | Polyester | Color tone of polyester | | | | | | Difference in color tones Δb* |
| | | Before heat resitance test | | | After heat resitance test | | | |
| | | L* | a* | b* | L* | * a | b* | |
| Example 1 | a-1 | 53.0 | -1.28 | 6.90 | 76.5 | -2.02 | 4.61 | -2.29 |
| Example 2 | b-1 | 51.8 | -1.56 | 6.75 | 74.2 | -2.09 | 3.15 | -3.60 |
| Example 3 | c-1 | 44.3 | -1.29 | 4.82 | 68.7 | -1.95 | 0.74 | -4.08 |
| Example 4 | d-1 | 55.9 | -1.51 | 8.02 | 77.2 | -2.15 | 5.85 | -2.17 |
| Example 5 | e-1 | 51.5 | -1.57 | 6.91 | 74.2 | -2.11 | 3.49 | -3.42 |
| Example 6 | f-1 | 47.1 | -1.35 | 5.05 | 68.8 | -1.98 | 1.36 | -3.69 |
| Example 7 | k-1 | 56.2 | -1.18 | 7.74 | 80.1 | -1.97 | 6.70 | -1.04 |
| Example 8 | l-1 | 56.0 | -1.13 | 8.62 | 81.9 | -1.92 | 7.12 | -1.50 |
| Example 9 | m-1 | 56.0 | -1.41 | 7.48 | 77.9 | -2.12 | 4.94 | -2.54 |
| Example 10 | n-1 | 45.9 | -0.59 | 11.24 | 67.7 | 0.58 | 8.70 | -2.54 |
| Comparative 1 | g-1 | 58.8 | -1.11 | 8.36 | 81.4 | -1.39 | 9.48 | 1.12 |
| Comparative 2 | h-1 | 55.9 | -1.18 | 9.15 | 83.1 | -1.65 | 8.33 | -0.82 |
| Comparative 3 | i-1 | 26.7 | 0.40 | 0.94 | 49.6 | -1.11 | -5.18 | -6.12 |
| Comparative 4 | j-1 | 56.5 | -3.42 | 5.88 | 83.2 | -1.94 | 8.36 | 2.48 |
| Comparative 5 | o-1 | 55.2 | 0.51 | 16.26 | 69.5 | 2.91 | 14.85 | -1.41 |

**[Table 3]**

| Table 3 | | | | | | | | | | | |
|---|---|---|---|---|---|---|---|---|---|---|---|
| | Polyester | Intrinsic viscosity (IV) | | | Color tone of polyester | | | Color tone of polyester | | | Difference in color tones |
| | | Melt-polycondensate (dL/g) | Solid-poly condensate (dL/g) | ΔIV (dL/g) | Melt-polycondensate | | | Solidt-polycondensate | | | |
| | | | | | L* | a* | b* | L* | a* | b* | Δb* |
| Example 1 | a-2 | 0.648 | 0.823 | 0.175 | 53.0 | -1.28 | 6.90 | 78.2 | -1.26 | 4.63 | -2.27 |
| Example 2 | b-2 | 0.662 | 0.902 | 0.240 | 51.8 | -1.56 | 6.75 | 74.3 | -1.51 | 3.46 | -3.29 |
| Example 3 | c-2 | 0.630 | 0.831 | 0.201 | 44.3 | -1.29 | 4.82 | 70.2 | -1.64 | 1.08 | -3.74 |
| Example 4 | d-2 | 0.628 | 0.840 | 0.212 | 55.9 | -1.51 | 8.02 | 77.8 | -1.34 | 5.66 | -2.36 |
| Example 5 | e-2 | 0.626 | 0.866 | 0.240 | 51.5 | -1.57 | 6.91 | 75.6 | -1.57 | 3.72 | -3.19 |
| Example 6 | f-2 | 0.617 | 0.828 | 0.211 | 47.1 | -1.35 | 5.05 | 71.4 | -1.61 | 1.60 | -3.45 |
| Example 7 | k-2 | 0.630 | 0.804 | 0.174 | 56.2 | -1.18 | 7.74 | 79.8 | -1.05 | 5.61 | -2.13 |
| Example 8 | l-2 | 0.631 | 0.853 | 0.222 | 56.0 | -1.13 | 8.62 | 81.6 | -0.90 | 6.43 | -2.19 |
| Example 9 | m-2 | 0.634 | 0.792 | 0.158 | 56.0 | -1.41 | 7.48 | 78.3 | -1.20 | 4.49 | -2.99 |
| Example 10 | n-2 | 0.651 | 0.874 | 0.223 | 45.9 | -0.59 | 11.24 | 68.4 | -1.69 | 10.01 | -1.23 |
| Comparative 1 | g-2 | 0.639 | 0.795 | 0.156 | 58.8 | -1.11 | 8.36 | 82.1 | -0.65 | 7.64 | -0.72 |
| Comparative 2 | h-2 | 0.625 | 0.851 | 0.226 | 55.9 | -1.18 | 9.15 | 82.9 | -0.59 | 7.65 | -1.50 |
| Comparative 3 | i-2 | 0.631 | 0.752 | 0.121 | 26.7 | 0.40 | 0.94 | 52.1 | -0.82 | -5.46 | -6.40 |
| Comparative 4 | j-2 | 0.650 | 0.878 | 0.228 | 56.5 | -3.42 | 5.88 | 79.9 | -2.62 | 4.42 | -1.46 |
| Comparative 5 | o-2 | 0.631 | 0.843 | 0.212 | 55.2 | 0.51 | 16.26 | 75.2 | 0.63 | 15.82 | -0.44 |

**[Table 4]**

| Table 4 | | | | | | | | |
|---|---|---|---|---|---|---|---|---|
| | Polyester | Color tone of polyester | | | | | | Difference in color tones Δb* |
| | | Before heat resistance test | | | After heat resistance test | | | |
| | | L* | a* | b* | L* | * a | b* | |
| Example 1 | a-2 | 78.2 | -1.26 | 4.63 | 79.7 | -1.67 | 4.18 | -0.45 |
| Example 2 | b-2 | 74.3 | -1.51 | 3.46 | 76.2 | -1.80 | 3.24 | -0.22 |
| Example 3 | c-2 | 70.2 | -1.64 | 1.08 | 71.8 | -1.74 | 0.87 | -0.21 |
| Example 4 | d-2 | 77.8 | -1.34 | 5.66 | 80.3 | -1.73 | 5.18 | -0.48 |
| Example 5 | e-2 | 75.6 | -1.57 | 3.72 | 77.2 | -1.72 | 3.56 | -0.16 |
| Example 6 | f-2 | 71.4 | -1.61 | 1.60 | 72.2 | -1.68 | 0.95 | -0.65 |
| Example 7 | k-2 | 79.8 | -1.05 | 5.61 | 81.9 | -1.62 | 5.51 | -0.10 |
| Example 8 | l-2 | 81.6 | -0.90 | 6.43 | 83.3 | -1.54 | 6.14 | -0.29 |
| Example 9 | m-2 | 78.3 | -1.20 | 4.49 | 80.5 | -1.74 | 4.44 | -0.05 |
| Example 10 | n-2 | 68.4 | -1.69 | 10.01 | 68.5 | -0.39 | 7.74 | -2.27 |
| Comparative 1 | z2 | 82.1 | -0.65 | 7.64 | 84.0 | -0.91 | 8.78 | 1.14 |
| Comparative 2 | h-2 | 82.9 | -0.59 | 7.65 | 85.5 | -1.13 | 7.83 | 0.18 |
| Comparative 3 | i-2 | 52.1 | -0.82 | -5.46 | 52.6 | -1.04 | -4.93 | 0.53 |
| Comparative 4 | j-2 | 79.9 | -2.62 | 4.42 | 85.8 | -1.39 | 8.00 | 3.58 |
| Comparative 5 | o-2 | 75.2 | 0.63 | 15.82 | 72.6 | 2.35 | 15.93 | 0.11 |

In Examples 1 to 3, 7, 9 and 10 in Table 1, the polyesters were obtained by the melt-polycondensation of bishydroxyethyl terephthalate in the presence of particles of hydrotalcite having the coating layer of titanic acid on the surface (the particulate titanic acid catalyst A) and titanium nitride; and in Examples 4 to 6 and 8, the polyesters were obtained by the melt-polycondensation of bishydroxyethyl terephthalate in the presence of particles of magnesium hydroxide having the coating layer of titanic acid on the surface (the particulate titanic acid catalyst B) and titanium nitride.

In Comparative Examples 1 and 2, the polyesters were obtained by the melt-polycondensation of bishydroxyethyl terephthalate using, respectively, particles of hydrotalcite having the coating layer of titanic acid on the surface as the particulate titanic acid catalyst and particles of magnesium hydroxide having the coating layer of titanic acid on the surface as the particulate titanic acid catalyst, without using titanium nitride.

As apparent from the comparison of Examples 7, 1, 2 and 3 with Comparative Example 1, the comparison of Examples 8, 4, 5 and 6 with Comparative Example 2, and the comparison of Example 10 with Comparative Example 5, all of the polyesters obtained by the melt-polycondensation of bishydroxyethyl terephthalate using both of the particulate titanic acid catalyst and titanium nitride were decreased in the value of b*, and moreover, the larger the amount of titanium nitride used, the lower the value of b* the obtained polyester had, as compared to each polyester obtained in Comparative Examples wherein no titanium nitride was used.

Accordingly, in the production of polyester using the particulate titanic acid catalyst, titanium nitride was found to function as a color tone regulator which reduced the yellowish tone or deepens the bluish tone of the obtained polyester, as conventionally known.

When a dye, Solvent Blue 104, which has hitherto been used as a blue color tone regulator in the production of polyester, was used instead of titanium nitride, the same effect of improving the color tone as obtained in the case where about 15 ppm of titanium nitride was added was observed by 1.5 ppm of addition per weight of polyester, as shown in Comparative Example 4. However, the obtained polyester was increased in the value of b* after the heat resistance test. Thus, the dye was found to have no effect to improve the heat resistance of the polyester when it has been heated. On the other hand, when titanium nitride was used alone, the polymerization activity was low, as shown in Comparative Example 3.

In general, when polyester is heated, a part thereof is thermally degraded or decomposed, and it is deepened in a yellowish tone and is increased in the value of b*. If titanium nitride does not have an effect of improving the heat resistance of the polyester obtained, even if the amount of titanium nitride used together with the particulate titanic acid catalyst is increased, the value of b* of the polyester obtained does not change.

The pellets of polyester shown in Table 1 were subjected to the heat resistance test under the conditions specified hereinbefore to determine the change in the value of b* caused by the heat resistance test. The results are shown in Table 2.

In all of Examples 1 to 10, the polyesters obtained were remarkably decreased in the value of b* after the heat resistance test, as compared to the value of b* before the heat resistance test. Moreover, the larger the amount of titanium nitride used together with the particulate titanic acid catalyst, the lower the value of b* the pellets of the polyester obtained had. For example, the values of b* of the pellets of the polyester obtained was decreased to a greater extent in the order of Example 7, Example 1, Example 2 and Example 3. Similarly, the values of b* of pellets of the polyester obtained were decreased to a greater extent in the order of Example 8, Example 4, Example 5 and Example 6.

In contrast, when the pellets of the polyester were obtained by using only the particulate titanic acid catalyst, without using titanium nitride, they were found to have values of b* only slightly increased or slightly decreased after the heat resistance test, as compared to the value of b* before the heat resistance test, as shown in Comparative Examples 1 and 2. In any case, it was found that the pellets of the polyester obtained were not decreased in the value of b*.

Therefore, it is shown that according to the invention, the pellets of the polyester obtained by using both of the particulate titanic acid catalyst and titanium nitride are improved in heat resistance when they are heated.

The pellets of the polyester obtained as the melt-polycondensate in Examples and Comparative Examples in Table 1 were subjected to solid-polycondensation to obtain pellets of the polyester as solid-polycondensate. The color tone of each of the pellets of the polyester obtained as the melt-polycondensate and pellets of the polyester obtained as solid-polycondensate, and the amount of change in the values of b* (Δb*) of the pellets are shown in Table 3.

When the pellets of the polyester were obtained by the solid-polycondensation using only the particulate titanic acid catalyst, without using titanium nitride, they were found to have values of b* decreased to some extent as compared to the pellets of the raw material polyester obtained as the melt-polycondensate in each case, as shown in Comparative Examples 1 and 2.

In contrast, when the pellets of the polyester were obtained by the solid-polycondensation using both of the particulate titanic acid catalyst and titanium nitride in Examples 1 to 10 according to the invention, they were found to be remarkably decreased in the value of b*, as compared to the values of b* of the pellets of the polyester obtained as the melt-polycondensate, and moreover, the lower the value of b*, the larger the amount of titanium nitride used. Thus, the pellets of the polyester obtained according to the method of the invention were found to be improved in heat-resistance when they were heated so that they were subjected to solid-polycondensation.

For example, the value of b* of the polyester obtained as solid-polycondensate was decreased to a greater extent in the order of Example 7, Example 1, Example 2 and Example 3, as compared to the pellets of the polyester as the melt-polycondensate. Similarly, the value of b* of the polyester obtained as the solid-polycondensate was decreased to a more extent in the order to Example 8, Example 4, Example 5, and Example 6, as compared to pellets of the polyester obtained as the melt-polycondensate.

In the case where the pellets of the polyester obtained by the melt-polycondensation were subjected to solid-polycondensation in the presence of the particulate titanic acid catalyst and titanium nitride, as shown in the comparison of Examples 1 to 3 and 7 to Comparative Example 1, when the particles of hydrotalcite having the coating layer of titanic acid on the surface were used as the particulate titanic acid catalyst together with titanium nitride, the difference between the intrinsic viscosity of the solid-polycondensate and the intrinsic viscosity of the melt-polycondensate, i.e., the difference (ΔIV) in the intrinsic viscosities is larger than that obtained in the case where titanium nitride was not co-used. The rate of increase in the intrinsic viscosity per unit time was, accordingly, higher.

Accordingly, when the solid-polycondensation is performed using both of the hydrotalcite particles having the titanic acid coating layer on the surface as the particulate titanic acid catalyst, and titanium nitride, the solid-polycondensation can be performed at a higher polycondensation rate as compared to the case where the particulate titanic acid catalyst is not used together with titanium nitride.

The results obtained when the polyester obtained by the solid-polycondensation was subjected to the heat-resistance test in the same manner as hereinbefore are shown in Table 4.

In Comparative Examples 1 and 2, bishydroxyethyl terephthalate was subjected to the melt-polycondensation using the hydrotalcite particles having the coating layer of titanic acid on the surface as the particulate titanic acid catalyst and the magnesium hydroxide particles having the coating layer of titanic acid on the surface as the particulate titanic acid catalyst, without using titanium nitride, to obtain polyesters, and then the obtained polyesters were subjected to the solid-polycondensation to obtain the polyesters as solid-polycondensate, and the polyesters were subjected to the heat-resistance test in the same manner as mentioned hereinbefore.

In Examples 1 to 3 and 7, bishydroxyethyl terephthalate was subjected to the melt-polycondensation in the presence of the hydrotalcite particles having the coating layer of titanic acid on the surface as the particulate titanic acid catalyst and titanium nitride to obtain the polyester, and then it was subjected to the solid-polycondensation to obtain the polyester, and the polyester was subjected to the heat-resistance test in the same manner as before.

In Examples 4 to 6 and 8, bishydroxyethyl terephthalate was subjected to the melt-polycondensation in the presence of the magnesium hydroxide particles having the coating layer of titanic acid on the surface as the particulate titanic acid catalyst and titanium nitride to obtain the polyester, and then it was subjected to the solid-polycondensation to obtain the polyester, and the polyester was subjected to the heat-resistance test in the same manner as before.

As apparent from the results shown in Table 4, the pellets of the polyester obtained as the solid-polycondensate in Comparative Examples 1 to 5 had a positive amount of change in the value of b* before and after the heat resistance test was, and thus the pellets of the polyester were deepened in a yellowish tone.

In contrast, the pellets of the polyester obtained as the solid-polycondensate in Examples 1 to 10 had a negative amount of change in the value of b* before and after the heat resistance test, and the pellets of the polyester were found to be improved in heat resistance when heated, and thus the pellets of the polyester were not deepened in a yellowish tone. The heat resistance of the pellets of the polyester obtained as solid-polycondensate was improved when they were heated.

## Claims

1. A method for producing polyester comprising:
a step for preparing an oligomer comprising a dicarboxylic acid diester by an esterification reaction or a transesterification reaction between a dicarboxylic acid or an ester-forming derivative thereof and a glycol, and then
a step for subjecting the oligomer to melt-polycondensation to provide polyester as melt-polycondensate,
wherein at least in the step of subjecting the oligomer to the melt-polycondensation of the two steps, the oligomer is subjected to the melt-polycondensation in the presence of titanium nitride and, as a polycondensation catalyst, particles of a solid base having a coating layer of titanic acid on the surfaces, thereby to provide polyester as melt-polycondensate.

2. The method for producing polyester according to claim 1, wherein the polyester as melt-polycondensate is further subjected to solid-polycondensation to provide polyester as solid-polycondensate.

3. The method for producing polyester according to claim 1, wherein the dicarboxylic acid is an aromatic dicarboxylic acid, the glycol is an alkylene glycol, and the oligomer comprising a dicarboxylic acid diester is an oligomer comprising an aromatic dicarboxylic acid bis(hydroxyalkyl) ester.

4. The method for producing polyester according to claim 1, wherein the solid base is magnesium hydroxide or hydrotalcite.

5. The method for producing polyester according to claim 1, wherein titanium nitride is present in an amount of 3 ppm or more in term of titanium per weight of polyester to be obtained.
